# EUROPÄISCHE PATENTSCHRIFT

(11) **EP 1 240 061 B1**
(45) Veröffentlichungstag und Bekanntmachung des Hinweises auf die Patenterteilung: **01.10.2003**
(21) Anmeldenummer: 01957710.5
(22) Anmeldetag: 05.07.2001
(51) Int. Cl.: B60S 1/38

(54) **WISCHBLATT**
WIPER BLADE
BALAI D'ESSUIE-GLACE

(30) Priorität: 15.07.2000 DE 10034475
(43) Veröffentlichungstag der Anmeldung: 18.09.2002
(73) Patentinhaber: ROBERT BOSCH GMBH, 70442 Stuttgart (DE)
(72) Erfinder: WEGNER, Norbert, 77815 Buehl (DE); LUYPERTS, Edwin, B-2400 Mol (BE)
(86) Internationale Anmeldenummer: DE0102503
(87) Internationale Veröffentlichungsnummer: WO02006100

(56) Entgegenhaltungen:
- WO-A-01/08948
- US-A- 3 021 548
- US-A- 5 732 436

## Beschreibung

Die Erfindung geht von einem Wischblatt gemäß den Merkmalen des Oberbegriffs des Patentanspruchs 1 aus.

Bekannte Scheibenwischer für Kraftfahrzeuge besitzen einen Wischarm, der aus einem auf einer Antriebsachse befestigten Befestigungsteil, einem mit diesem über ein Kniegelenk verbundenen Gelenkteil und aus einer sich an das Gelenkteil starr anschließenden Wischstange aufgebaut ist. Am Wischarm ist ein Wischblatt mit einer Wischleiste angelenkt, die über eine Kraftfahrzeugscheibe geführt wird, wobei das Gelenkteil und das Wischblatt so ausgebildet sind, dass sich die Wischleiste einer Wölbung der Kraftfahrzeugscheibe anpassen kann. Ein erforderlicher Anpreßdruck der Wischleiste auf der Kraftfahrzeugscheibe wird mit mindestens einer Zugfeder erreicht, die das Befestigungsteil und das Gelenkteil gemeinsam mit der Wischstange über das Kniegelenk verspannt.

Die Wischleiste besteht aus einem Elastomer, z.B. einem Natur- oder Synthesekautschuk, oder aus Äthylenpropylen. Sie hat eine Kopfleiste, die über einen Kippsteg, der zwischen zwei Längsnuten liegt, mit einer auf der Fahrzeugscheibe aufliegenden Wischlippe verbunden ist. Durch den Kippsteg kann die Wischlippe im Umkehrpunkt der Wischbewegung in die entgegengesetzte Richtung umklappen, so dass sie stets einen günstigen Anstellwinkel zur Windschutzscheibe einnimmt. Wird der Scheibenwischer betätigt, gleitet die Wischleiste mit der Wischlippe über die Kraftfahrzeugscheibe, wobei sie sich durch Reibung zwischen der Wischlippe und der Windschutzscheibe abnutzt. Ferner wirken Umwelteinflüsse auf die Wischleiste, wie beispielsweise Temperaturschwankungen, UV-Strahlung, Salzwasser, Abgase usw., die zu einer frühzeitigen Werkstoffalterung und einem verstärkten Verschleiß führen können.

Um sicher zu stellen, dass die Wischleiste in einwandfreiem Zustand ist, wenn ein neues Kraftfahrzeug ausgeliefert wird, ist es aus der DE 30 05 965 C2 bekannt, die Wischleiste mit einem Schutzprofil abzudecken, bevor das Kraftfahrzeug konserviert wird. Das Schutzprofil wird erst entfernt, wenn das neue Kraftfahrzeug nach einer Entkonservierung einem Käufer übergeben wird. Das Schutzprofil besitzt zwei in Längsrichtung verlaufende Seitenwangen, an denen Absätze angeformt sind, die in die Längsnuten zu beiden Seiten des Kippstegs der Wischleiste eingreifen. Um die Fahrzeugscheibe zum Rangieren des Kraftfahrzeugs reinigen zu können, wenn die Fahrzeugscheibe bei einer Zwischenlagerung des Kraftfahrzeugs, bei der Konservierung usw. verschmutzt oder die Sicht durch Regen behindert ist, besitzt das Schutzprofil an seiner Außenkontur eine Wischlippe. Das Schutzprofil besteht in der Regel aus einem geeigneten Kunststoff.

Um das Schutzprofil verliersicher am Wischblatt zu befestigen und die Wischleiste stirnseitig von Umwelteinflüssen zu schützen, ist ferner bekannt, das Schutzprofil stirnseitig zu verschweißen. Das Schutzprofil wird hierfür an den seitlichen Stirnseiten erwärmt und gegen eine Platte gedrückt. Es entsteht eine Materialplatte, die das Schutzprofil verschließt. Vor der Montage kann nur eine Stirnseite verschweißt werden. Wird die zweite Stirnseite verschweißt nachdem das Schutzprofil auf die Wischleiste aufgeschoben ist, muß zur Demontage das Schutzprofil aufgeschnitten werden, wodurch es zerstört wird und nicht mehr wieder verwendet werden kann.

Aus der DE 44 10 446 A1, die die Merkmale des Oberbegriffs des Anspruchs 1 offenbart, ist ferner ein ähnliches Schutzprofil bekannt, das zur axialen Sicherung gegenüber der Wischleiste im Bereich der Stirnseiten nach innen weisende Ausstülpungen in den Ansätzen aufweist. Die Ausstülpungen blockieren eine Längsverschiebung des Schutzprofils, wobei ihre Höhe so bemessen ist, dass sie nicht in die Längsnuten eindringen können. Sie werden durch Ziehen, beispielsweise mittels Kugelstauchen, hergestellt.

In der älteren Patentanmeldung DE 199 35 858.3 ist ein Schutzprofil beschrieben, das an seinen Enden nach innen weisende Vorsprünge aufweist, die von den Seitenwangen ausgehen und entweder bis zur gegenüberliegenden Seitenwange reichen oder mit der Seitenwange einen Spalt bilden, der die Montage auf einer Wischleiste zulässt. Die Vorsprünge können mit anderen Verschlüssen der Stirnseiten kombiniert werden, z.B. mit einem Deckel oder einer verschweißten Stirnseite. Das Schutzprofil wird durch die Verschlüsse bzw. die Vorsprünge axial zur Wischleiste fixiert.

Vorteile der Erfindung

Nach der Erfindung gehen die Vorsprünge von einer Seitenwange des Schutzprofils aus, wobei ein erster Vorsprung nahe der äußeren Stirnseite des Schutzprofils bis dicht an die gegenüberliegenden Seitenwange des Schutzprofils reicht, während ein zweiter Vorsprung nahe der inneren Stirnseite zur gegenüberliegenden Seitenwange einen Spalt bildet, der eine Montage oder Demontage des Schutzprofils in Längsrichtung zuläßt. Die Vorsprünge können einfach und schnell eingebracht werden, beispielsweise bei Schutzprofilen aus Metall mit einer Art Zange oder bei Kunststoffprofilen mit einer Wärmequelle, insbesondere mit einer Ultraschallquelle mittels einer Ultraschallsonde.

Bei einer Schwenkbewegung des Scheibenwischers über eine Fahrzeugscheibe, wirken auf das Schutzprofil Kraftkomponenten in axialer Richtung, die insbesondere bei trockener oder stark verschmutzter Fahrzeugscheibe sowie bei Wischeranlagen mit einer Viergelenksteuerung oder einem Hubgetriebe besonders groß sind. Bei einer Viergelenksteuerung oder einem Hubgetriebe wird der Schwenkbewegung des Scheibenwischer eine Hubbewegung überlagert, um das Wischfeld zu vergrößern. Allerdings treten hierbei erhebliche Kräfte in axialer Richtung des Wischblatts auf. Diese sind bestrebt, das Schutzprofil in Richtung des Innenkreises, der inneren Stirnseite, des Wischblatts zu verschieben. Je nach Größe der axialen Kräfte können dabei die Verschlüsse an der äußeren Stirnseite des Schutzprofils, wenn sie für eine Demontage geeignet sind, überdrückt werden. Als Folge wandert das Schutzprofil nach innen. Dadurch wird das Wischergebnis stark beeinträchtigt und ein Teil der zu schützenden Wischleiste des Scheibenwischers wird frei gelegt.

Das erfindungsgemäße Wischblatt besitzt eine Schutzschiene, die an der äußeren Stirnseite durch einen quer zur Öffnung verlaufenden Vorsprung geschlossen ist, der von einer Seitenwange ausgeht und bis zur gegenüberliegenden Seitenwange des Schutzprofils reicht. Der Verschluss lässt keine Montage oder Demontage zu. Dadurch wird gewährleistet, dass das Schutzprofil selbst bei großen axialen Kräften nicht nach innen wandern kann. Es kann aber trotzdem über die weniger belastete innere Stirnseite montiert und demontiert werden, so dass es mehrmals wiederverwendet werden kann.

Zweckmäßigerweise nimmt die Länge der Vorsprünge in Richtung einer Wischlippe ab, die an der äußeren Kontur des Schutzprofils vorgesehen ist. Die Vorsprünge folgen damit im wesentlichen der inneren Kontur der Seitenwangen, so dass sich der erste Vorsprung dicht an die gegenüberliegende Seitenwange anschließen kann und der Spalt zwischen dem zweiten Vorsprung und der gegenüberliegenden Seitenwange nahezu gleich bleibend breit ist. Der zweite Vorsprung weist zur Montagerichtung eine geneigte Schräge auf, die bei der Montage die Wischlippe der Wischleiste zum Spalt lenkt. Dadurch wird die Montage des Schutzprofils wesentlich vereinfacht. Um ebenfalls die Demontage zu erleichtern, besitzt der zweite Vorsprung eine zur Demontagerichtung ebenfalls geneigte Schräge, die bei der Demontage die Wischlippe der Wischleiste zum Spalt lenkt. Zweckmäßigerweise schließt die in Montagerichtung wirksame Schräge mit einer Querschnittebene einen größeren Winkel ein, als die in Demontagerichtung wirksame Schräge, da die in Demontagerichtung wirksame Schräge während des Wischbetriebs eine sichere Fixierung des Schutzprofils gegenüber nach außen wirkenden, axialen Kräften gewährleisten muss.

Um die richtige Montage des Schutzprofils auch in einer automatischen Montageeinrichtung sicherzustellen, ist es zweckmäßig, dass sich die ersten Vorsprünge von den zweiten Vorsprüngen in der Form, insbesondere im Querschnitt und/oder Längsschnitt unterscheiden. Dadurch kann das innere und äußere Ende des Schutzprofils einfach und sicher identifiziert werden. Ferner können die verschiedenen Vorsprünge jeweils an verschiedenen Seitenwangen des Schutzprofils vorgesehen werden.

Die Vorsprünge können einfach und schnell eingebracht werden, beispielsweise bei Metallprofilen mit einer Art Zange und bei Kunststoffprofilen mit einer Wärmequelle, insbesondere mit einer Ultraschallquelle mittels einer Ultraschallsonde, wobei in vorteilhafter Weise die ersten Vorsprünge an der äußeren Stirnseite des Schutzprofils mit der gegenüberliegenden Seitenwange verschweißt werden können. Dabei werden die Festigkeit und Formstabilität, insbesondere quer zu den Seitenwangen in dem kritischen Endbereich erhöht.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

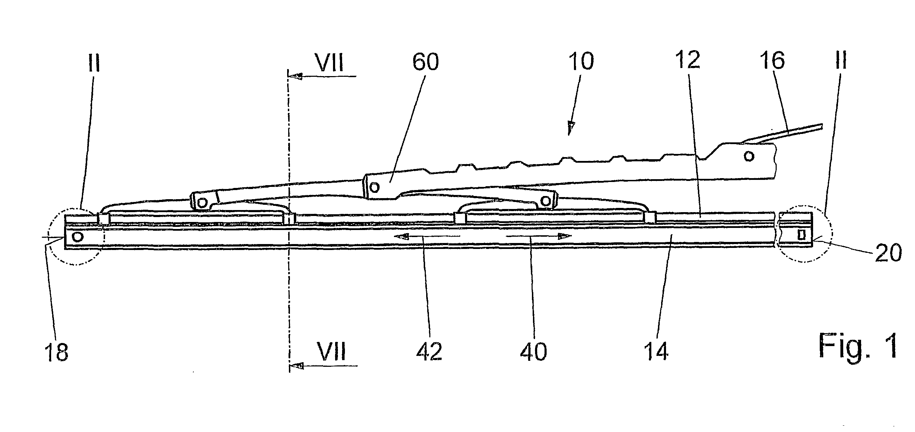

- Fig. 1: eine Teilansicht eines Wischblatts,

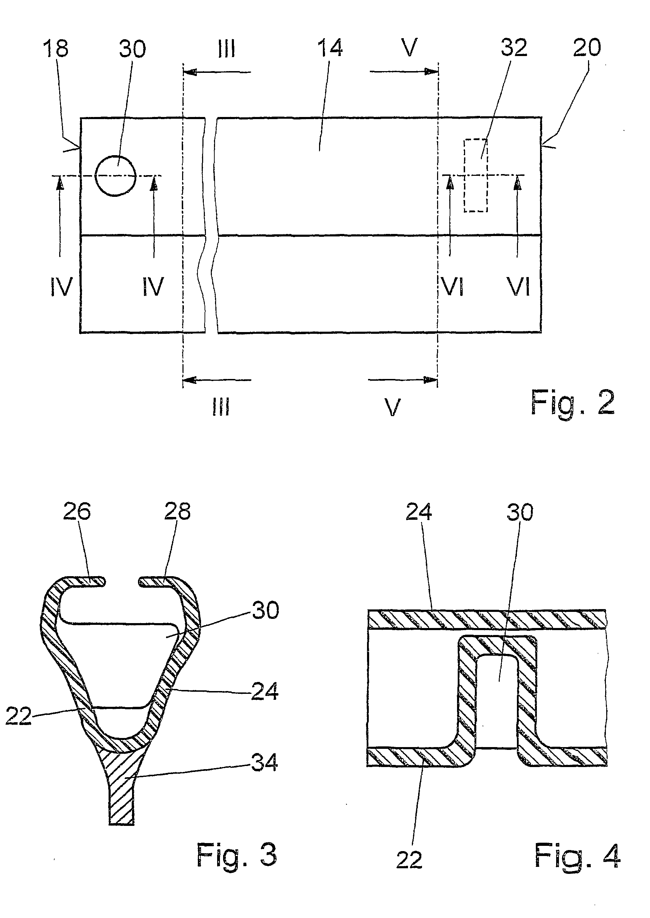

- Fig. 2: eine vergrößerte Teilansicht der Enden eines Schutzprofils entsprechend der Linie II in Fig. 1,
- Fig. 3: einen Schnitt entsprechend der Linie III-III in Fig. 2,
- Fig. 4: einen Schnitt entsprechend der Linie IV-IV in Fig. 2,

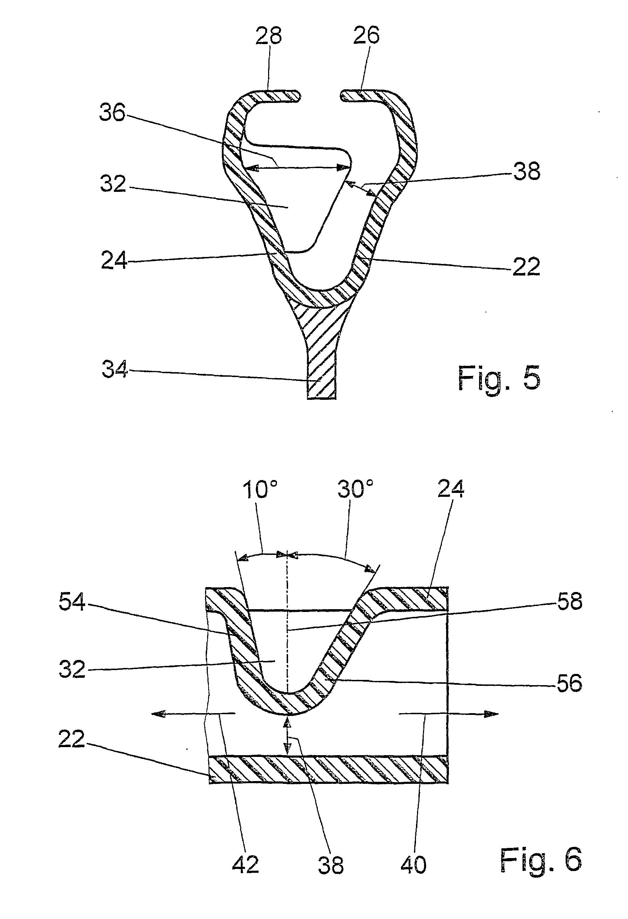

- Fig. 5: einen Schnitt entsprechend der Linie V-V in Fig. 2,
- Fig. 6: einen Schnitt entsprechend der Linie VI-VI in Fig. 2 und

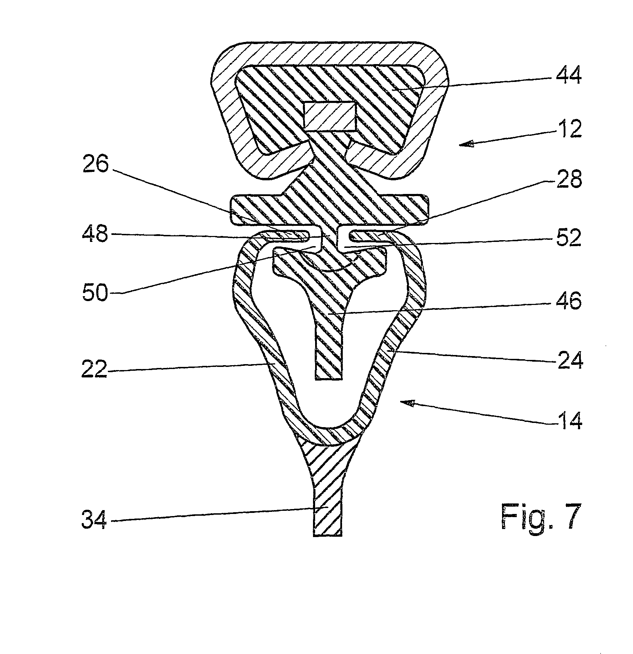

- Fig. 7: einen Schnitt entsprechend der Linie VII-VII in Fig. 1.

### Beschreibung der Ausführungsbeispiele

Das Wischblatt 10 ist an einer Wischstange 16 eines nicht näher dargestellten Wischarms angelenkt und besitzt eine Wischleiste 12, die von einem Tragbügelsystem 60 gehalten wird. Anstelle des Tragbügelsystems 60 kann auch ein bügelloser Träger die Wischleiste 12 halten, der sich auf Grund seiner Elastizität der Krümmung einer Fahrzeugscheibe anpassen kann.

Die Wischleiste 12 ist mittels ihrer Kopfleiste 44 mit dem Tragbügelsystem 60 verbunden. An die Kopfleiste 44 schließt sich über einen Kippsteg 48 eine Wischlippe 46 an. Der Kippsteg 48, der von zwei seitlichen Längsnuten 50 und 52 begrenzt wird, erlaubt der Wischlippe 46, in den Umkehrlagen der Schwenkbewegung den Anstellwinkel zur Fahrzeugscheibe in den Umkehrlagen entsprechend der Wischrichtung zu ändern.

Zum Schutz der Wischleiste 12, insbesondere der Wischlippe 46 vor einer Auslieferung eines Neufahrzeugs, wird auf die Wischleiste 12 ein Schutzprofil 14 von einer äußeren Stirnseite 18 aus in Montagerichtung 40 aufgeschoben. Das Schutzprofil 14 hat zwei miteinander verbundene Seitenwangen 22 und 24, an die sich Ansätze 26 und 28 anschließen, die in die Längsnuten 50 und 52 eingreifen. An der äußeren Kontur des Schutzprofils 14 ist in dem Bereich, in dem die Seitenwangen 22 und 24 zusammentreffen, eine Wischlippe 34 vorgesehen. Die Wandstärke und Form der Seitenwangen 22 und 24 ist so gewählt, dass sich die Wischlippe 34 in einem gewissen Maße der Krümmung der Fahrzeugscheibe elastisch anpassen kann.

Im Bereich der äußeren Stirnseite 18 und einer inneren Stirnseite 20 besitzt das Schutzprofil 14 an seinen Enden Vorsprünge 30 und 32, die von einer Seitenwange 22 bzw. 24 ausgehen und sich quer durch das Innere des Schutzprofils 14 erstrecken. Ein erster Vorsprung 30 im Bereich der äußeren Stirnseite 18 geht von der Seitenwange 22 aus und reicht bis dicht an die gegenüberliegende Seitenwange 24 heran. Er kann die Seitenwange 24 auch berühren und mit dieser verschweißt werden. Am anderen Ende des Schutzprofils 14 ist im Bereich der inneren Stirnseite 20 ein zweiter Vorsprung 32 vorgesehen. Dieser geht von der Seitenwange 24 aus und erstreckt sich zur gegenüberliegende Seitenwange 22 hin, mit der er einen Spalt 38 bildet, der eine Montage bzw. Demontage des Schutzprofils zulässt.

Wird das Schutzprofil 14 mit seinem Ende, das den zweiten Vorsprung 32 aufweist, in Montagerichtung 40 auf die Wischleiste 12 aufgeschoben, wird die Wischlippe 46 der Wischleiste 12 durch den Spalt 38 am zweiten Vorsprung 32 vorbeigeführt, bis das Ende des Schutzprofils 14 mit dem ersten Vorsprung 30 am Ende der Wischleiste 12 anliegt. In dieser Position nimmt die Wischlippe 46 der Wischleiste 12 ihre ursprüngliche Lage wieder ein, so dass die Wischleiste 12 zwischen den Vorsprüngen 30 und 32 axial fixiert ist.

Um die Montage zu erleichtern, besitzt der zweite Vorsprung 32 eine zur Montagerichtung 40 geneigte Schräge 56, die zu einer Querschnittebene 58 einen Winkel von ungefähr 30° aufweist. In Demontagerichtung 42 weist der zweite Vorsprung 32 eine weitere Schräge 54 auf. Diese Schräge 54 bildet mit der Querschnittebene 58 einen Winkel von ungefähr 10°. Dieser Winkel wird so bemessen, dass er einerseits eine gute Demontage des Schutzprofils 14 ermöglicht und anderseits eine sichere Fixierung des Schutzprofils 14 gewährleistet.

Das Schutzprofil 14 kann aus Blech hergestellt werden. Zweckmäßigerweise besteht es aber aus einem extrudierten Kunststoff. In diesem Fall ist es zweckmäßig, die Vorsprünge 30 und 32 mit einer Ultraschallsonde einzubringen, wobei die Länge 36 der Vorsprünge 30 und 32 in Richtung auf die Wischlippe 34 abnimmt, so dass die Vorsprünge 30 und 32 im wesentlichen parallel zu ihren gegenüberliegenden Seitenwangen 22 und 24 verlaufen. Dadurch ergibt sich im Bereich des ersten Vorsprungs 30 die Möglichkeit, diesen großflächiger mit der gegenüberliegenden Seitenwange 24 zu verschweißen, während im Bereich des zweiten Vorsprungs der Spalt 38 eine annähernd konstante Breite aufweist.

## Patentansprüche

1. Wischblatt (10) mit einer Wischleiste (12), die von einem Schutzprofil (14) umgeben ist, das mit an seinen Seitenwangen (22, 24) angeformten Ansätzen (26, 28) in Längsnuten (50, 52) der Wischleiste (12) eingreift und durch nach innen weisende Vorsprünge (30, 32) im Bereich seiner Stirnseiten (18, 20) axial an der Wischleiste (12) fixiert ist, **dadurch gekennzeichnet, dass** die Vorsprünge (30, 32) von einer Seitenwange (22, 24) des Schutzprofils (14) ausgehen und ein erster Vorsprung (30) an der äußeren Stirnseite (18) des Schutzprofils (14) bis dicht an die gegenüberliegende Seitenwange (22, 24) des Schutzprofils (14) reicht, während ein zweiter Vorsprung (32) an der inneren Stirnseite (20) zur gegenüberliegenden Seitenwange (22, 24) einen Spalt (38) bildet, der eine Montage oder Demontage des Schutzprofils (14) in Längsrichtung (40, 42) zulässt.

2. Wischblatt (10) nach Anspruch 1, **dadurch gekennzeichnet, dass** die Länge (36) der Vorsprünge (30, 32) in Richtung einer Wischlippe (34) des Schutzprofils (14) abnimmt und der Spalt (38) nahezu gleich bleibend breit ist.

3. Wischblatt (10) nach einem der vorhergehenden Ansprüche, **dadurch gekennzeichnet, dass** der zweite Vorsprung (32) zur Montagerichtung (40) eine geneigte Schräge (56) aufweist, die bei der Montage die Wischlippe (46) der Wischleiste (12) zum Spalt (38) lenkt.

4. Wischblatt (10) nach einem der vorhergehenden Ansprüche, **dadurch gekennzeichnet, dass** der zweite Vorsprung (32) zur Demontagerichtung (42) eine geneigte Schräge (54) aufweist, die bei der Demontage die Wischlippe (46) der Wischleiste (12) zum Spalt (38) lenkt.

5. Wischblatt (10) nach einem der vorhergehenden Ansprüche, **dadurch gekennzeichnet, dass** die in Montagerichtung (40) wirksame Schräge (56) mit einer Querschnittebene (58) einen größeren Winkel einschließt als die in Demontagerichtung (42) wirksame Schräge (54).

6. Wischblatt (10) nach einem der vorhergehenden Ansprüche, **dadurch gekennzeichnet, dass** sich die ersten Vorsprünge (30) von den zweiten Vorsprüngen (32) im Querschnitt und/oder Längsschnitt unterscheiden.

7. Wischblatt (10) nach einem der vorhergehenden Ansprüche, **dadurch gekennzeichnet, dass** das Schutzprofil (14) aus Kunststoff ist und mindestens ein Vorsprung (30, 32) mit einer Ultraschallsonde eingebracht ist.

8. Wischblatt (10) nach Anspruch 7, **dadurch gekennzeichnet, dass** der erste Vorsprung (30) mindestens teilweise mit der gegenüberliegenden Seitenwange (22, 24) verschweißt ist.

## Claims

1. Wiper blade (10) having a wiper strip (12) which is surrounded by a protective profile (14) which engages by means of lugs (26, 28), which are integrally formed on its side members (22, 24), in longitudinal grooves (50, 52) of the wiper strip (12) and, by means of inwardly pointing projections (30, 32), is fixed axially in the region of its end sides (18, 20) on the wiper strip (12), **characterized in that** the projections (30, 32) emerge from a side member (22, 24) of the protective profile (14), and a first projection (30) on the outer end side (18) of the protective profile (14) extends until close to the opposite side member (22, 24) of the protective profile (14) while a second projection (32) on the inner end side (20) forms a gap (38) to the opposite side member (22, 24), the said gap permitting the protective profile (14) to be installed or removed in the longitudinal direction (40, 42).

2. Wiper blade (10) according to Claim 1,
**characterized in that** the length (36) of the projections (30, 32) decreases in the direction of a wiper lip (34) of the protective profile (14) and the gap (38) remains virtually the same width.

3. Wiper blade (10) according to one of the preceding claims, **characterized in that** the second projection (32) has an inclined slope (56) towards the installation direction (40), the slope guiding the wiper lip (46) of the wiper strip (12) to the gap during installation.

4. Wiper blade (10) according to one of the preceding claims, **characterized in that** the second projection (32) has an inclined slope (54) towards the removal direction (42), the said slope guiding the wiper lip (46) of the wiper strip (12) to the gap (38) during removal.

5. Wiper blade (10) according to one of the preceding claims, **characterized in that** the slope (56) which is effective in the installation direction (40) encloses a larger angle with a cross-sectional plane (58) than the slope (54) effective in the removal direction.

6. Wiper blade (10) according to one of the preceding claims, **characterized in that** the first projections (30) differ from the second projections (32) in cross section and/or longitudinal section.

7. Wiper blade (10) according to one of the preceding claims, **characterized in that** the protective profile (14) is made of plastic and at least one projection (30, 32) having an ultrasonic probe is placed in it.

8. Wiper blade (10) according to Claim 7, **characterized in that** the first projection (30) is at least partially welded to the opposite side member (22, 24).

## Revendications

1. Balai d'essuie-glace (10), équipé d'une baguette d'essuie-glace (12) entourée d'un profil de protection, (14) s'appliquant, avec les épaulements (26, 28) formés sur ses joues latérales (22, 24), aux rainures longitudinales (50, 52) de la baguette d'essuie-glace (12) et étant fixée, grâce aux saillies dirigées vers l'intérieur (30, 32) apparaissant dans la zone de ses extrémités (18, 20), dans l'axe de la baguette d'essuie-glace (12),
**caractérisé en ce que**
les saillies (30, 32) proviennent d'une joue latérale (22, 24) du profil de protection (14) et **en ce qu'**une première saillie (30), formée sur l'extrémité extérieure (18) du profil de protection (14), va jusqu'à proximité de la joue latérale (22, 24) opposée du profil de protection (14), alors qu'une deuxième saillie (32) forme, sur l'extrémité intérieure (20), une fente (38) dans la joue latérale (22, 24) opposée, ce qui permet de monter ou de démonter le profil de protection (14) dans le sens de la longueur (40, 42).

2. Balai d'essuie-glace (10) selon la revendication 1,
**caractérisé en ce que**
la longueur (36) des saillies (30, 32) diminue dans le sens de la lèvre d'essuie-glace (34) du profil de protection (14) et la largeur de la fente (38) reste quasiment identique.

3. Balai d'essuie-glace (10) selon l'une des revendications précédentes,
**caractérisé en ce que**
la deuxième saillie (32) présente une déclivité (56) dans le sens du montage (40), ce qui entraîne, lors du montage, la formation d'une fente (38) pour la lèvre d'essuie-glace (46) de la baguette d'essuie-glace (12).

4. Balai d'essuie-glace (10) selon l'une des revendications précédentes,
**caractérisé en ce que**
la deuxième saillie (32) présente une déclivité (54) dans le sens du démontage (42), ce qui entraîne, lors du démontage, la formation d'une fente (38) pour la lèvre d'essuie-glace (46) de la baguette d'essuie-glace (12).

5. Balai d'essuie-glace (10) selon l'une des revendications précédentes,
**caractérisé en ce que**
la déclivité (56) s'appliquant dans le sens du montage (40) forme, avec un plan perpendiculaire (58), un angle plus grand que la déclivité (54) s'appliquant dans le sens du démontage (42).

6. Balai d'essuie-glace (10) selon l'une des revendications précédentes,
**caractérisé en ce que**
les premières saillies (30) sont différentes des deuxièmes saillies (32) dans la coupe transversale et la coupe longitudinale.

7. Balai d'essuie-glace (10) selon l'une des revendications précédentes,
**caractérisé en ce que**
le profil de protection (14) est en matière synthétique et au moins une saillie (30, 32) est équipée d'une sonde à ultrasons.

8. Balai d'essuie-glace (10) selon la revendication 7,
**caractérisé en ce que**
la première saillie (30) est au moins partiellement soudée à la joue latérale opposée (22, 24).
